# EUROPÄISCHE PATENTSCHRIFT

(11) **EP 2 428 659 B1**
(45) Veröffentlichungstag und Bekanntmachung des Hinweises auf die Patenterteilung: **18.05.2016**
(21) Anmeldenummer: 10009478.8
(22) Anmeldetag: 13.09.2010
(51) Int. Cl.: F01N 3/20, F01N 3/08

(54) **Katalysator zur Entfernung von Stickoxiden aus dem Abgas von Dieselmotoren**
Catalytic convertor for removing nitrogen oxides from the exhaust gas of diesel motors
Catalyseur destiné à supprimer les oxydes d'azote contenus dans les gaz d'échappement de moteurs diesel

(43) Veröffentlichungstag der Anmeldung: 14.03.2012
(60) Teilanmeldung: 16165294.6
(73) Patentinhaber: Umicore AG & Co. KG, 63457 Hanau-Wolfgang (DE)
(72) Erfinder: Spurk, Paul, Dr., 64331 Weiterstadt (DE); Söger, Nicola, Dr., 61130 Nidderau (DE); Müller, Elena, Dr., 64319 Pfungstadt (DE); Malmberg, Stephan, Dipl.-Ing., 60389 Frankfurt (DE)

(56) Entgegenhaltungen:
- EP-A1- 1 961 933
- DE-A1-102004 012 272
- US-A1- 2009 288 402
- US-A1- 2010 199 635

## Beschreibung

Die Erfindung betrifft einen Katalysator zur Entfernung von Stickoxiden aus dem Abgas von Dieselmotoren, sowie ein Verfahren zur Verminderung von Stickoxiden im Abgas von Dieselmotoren.

Das Abgas von Dieselmotoren enthält neben den aus einer unvollständigen Verbrennung des Kraftstoffs resultierenden Schadgasen Kohlenmonoxid (CO) und Kohlenwasserstoffe (HC) Rußpartikel (PM) und Stickoxide (NOₓ). Außerdem enthält das Abgas von Dieselmotoren bis zu 15 Vol.-% Sauerstoff. Es ist bekannt, daß die oxidierbaren Schadgase CO und HC durch Überleiten über einen geeigneten Oxidationskatalysator in unbedenkliches Kohlendioxid (CO₂) umgewandelt, und Partikel durch Durchleiten des Abgases durch ein geeignetes Rußpartikelfilter entfernt werden können.

Die reduktive Entfernung von Stickoxiden ("Entstickung") ist wegen des hohen Sauerstoffgehaltes der Dieselabgase wesentlich schwieriger. Ein bekanntes Entstickungsverfahren ist das sogenannte SCR-Verfahren (SCR = Selective Catalytic Reduction), d.h. die selektive katalytische Reduktion der Stickoxide mit dem Reduktionsmittel Ammoniak an einem dafür geeigneten Katalysator, dem SCR-Katalysator. Dabei kann Ammoniak als solches oder in Form einer unter Umgebungsbedingungen zu Ammoniak zersetzlichen Vorläuferverbindung dem Abgasstrom zugegeben werden, wobei unter "Umgebungsbedingungen" die Umgebung der zu Ammoniak zersetzlichen Verbindung im Abgasstrom vor SCR-Katalysator verstanden wird. Zur Durchführung des SCR-Verfahrens sind eine Quelle zur Bereitstellung des Reduktionsmittels, eine Einspritzvorrichtung zur bedarfsgerechten Eindosierung des Reduktionsmittels in das Abgas und ein im Strömungsweg des Abgases angeordneter SCR-Katalysator notwendig. Die Gesamtheit aus Reduktionsmittelquelle, SCR-Katalysator und anströmseitig zum SCR-Katalysator angeordneter Einspritzvorrichtung wird auch als SCR-System bezeichnet.

Desweiteren können Stickoxid-Speicherkatalysatoren zur Entstickung von Dieselabgasen eingesetzt werden. Ihre Arbeitsweise wird ausführlich in der SAE-Schrift SAE 950809 beschrieben. Die Reinigungswirkung der Stickoxidspeicherkatalysatoren beruht darauf, daß in einer mageren Betriebsphase des Motors die Stickoxide vom Speichermaterial des Speicherkatalysators vorwiegend in Form von Nitraten gespeichert werden. In einer darauffolgenden fetten Betriebsphase des Motors werden die zuvor gebildeten Nitrate zersetzt und die wieder freiwerdenden Stickoxide mit den reduzierenden Abgasanteilen am Speicherkatalysator zu Stickstoff, Kohlendioxid und Wasser umgesetzt.

Auch Kombinationsverfahren zur Entstickung von Verbrennungsmotorenabgasen, in denen SCR-Katalysatoren und Stickoxid-Speicherkatalysatoren zum Einsatz kommen, sind bereits beschrieben worden. In diesen Kombinationssystemen ist der Stickoxid-Speicherkatalysator dem SCR-Katalysator in der Regel anströmseitig vorgeschaltet und dient dazu, während einer fettem Betriebsphase Ammoniak zu erzeugen, das dann im nachgeordneten SCR-Katalysator eingespeichert wird. Stickoxide, die während der sich anschließenden, mageren Betriebsphase durch den Stickoxid-Speicherkatalysator wegen unzureichenden dynamischen Speicherkapazität durchbrechen, können mit Hilfe dieses eingespeicherten Ammoniaks auf dem nachgeordneten SCR-Katalysator zu Stickstoff reduziert werden. Entsprechende Systeme sind beispielsweise in DE 10104160, DE 10308287 und WO 2008/0077602 beschrieben worden.

Auch umgekehrte Systemausgestaltungen mit einem abströmseitig zum SCR-Katalysator angeordneten Stickoxid-Speicherkatalysator wurden schon vorgeschlagen, wie beispielsweise in EP 0 879 633 und US 7,160,832.

Desweiteren sind im Stand der Technik Katalysatoren bekannt, die sowohl über Stickoxide speichernde Wirkung verfügen, als auch in der Lage sind, die selektive katalytische Reduktion von Stickstoff mit Ammoniak zu katalysieren. EP 1 203 611 offenbart eine Abgasreinigungsvorrichtung zur selektiven katalytischen Reduktion von Stickoxiden unter mageren Abgasbedingungen, die mindestens einen Katalysator umfasst mit einer katalytisch aktiven Komponente für die selektive katalytische Reduktion (SCR-Komponente) und zusätzlich mindestens einer Stickoxid-Speicherkomponente (NOₓ-Komponente). Der Katalysator wird nach dem Harnstoff-SCR-Verfahren betrieben, d.h. als Reduktionsmittel für Stickoxide wird Ammoniak verwendet, das aus dem mageren Abgas zugesetztem Harnstoff erzeugt wird.

Auch DE 198 06 062 offenbart einen Reduktionskatalysator zur Schadstoffminderung dieselmotorischer Abgase, der in seiner Aktivmasse neben einem SCR-Katalysatormaterial auf der Basis der katalytisch wirksamen Oxide TiO₂, WO₃, MoO₃ und V₂O₅ ein NOₓ-Speichermaterial enthält. Das NOₓ-Speichermaterial enthält als aktive Komponente wenigstens ein hochoberflächiges anorganisches Oxid, welches vorzugsweise ausgewählt ist aus der Gruppe Al₂O₃, SiO₂, ZrO₂, Zeolithe und Schichtsilikate.

EP 0 666 099 beschreibt ein Verfahren zur Entfernung von Stickoxiden aus oxidierenden Abgasen, welche über einen speziellen Katalysator geleitet werden, der die Stickoxide einspeichert, wobei anschließend periodisch ein Reduktionsmittel zum Abgas gegeben wird, womit die im Katalysator adsorbierten Stickoxide zu Stickstoff reduziert werden. Der Katalysator enthält anorganische Oxide und katalytisch aktive Komponenten. Die katalytisch aktiven Komponenten umfassen einerseits Edelmetalle ausgewählt aus Platin, Palladium, Rhodium und Ruthenium, sowie andererseits mindestens ein Alkali- und/oder Erdalkalimetall. Desweiteren kann der Katalysator Schwermetalle ausgewählt aus Mangan, Kupfer, Cobalt, Molybdän, Wolfram und Vanadium bzw. Verbindungen derselben enthalten.

Aus der US2009/0288402 ist außerdem einen Katalysator mit einem kupferhaltigen Zeolith bekannt.

Gegenwärtig wird das SCR-Verfahren zur Entstickung von Dieselabgasen für Applikationen in Personenkraftwagen und zur Regelanwendung bei Nutzfahrzeugen als vielversprechendstes Reinigungsverfahren für Stickoxide angesehen. Insbesondere bei Personenkraftwagen ist jedoch zu beobachten, daß sich die im NEDC ("New European Driving Cycle") auftretenden Temperaturen des zu reinigenden Abgases immer mehr in den kälteren Bereich verschieben. Da eine Dosierung von Harnstoff als Quelle für das Reduktionsmittel Ammoniak erst bei Temperaturen ab 180°C kontrolliert möglich ist, ohne unerwünschte Ablagerungen von Harnstoff und Folgeprodukten in der Abgasanlage in Kauf zu nehmen, führt diese Entwicklung der Abgastemperaturen dazu, daß das SCR-Verfahren im sogenannten "innerstädtischen Teil" (ECE) des NEDC nicht mehr effektiv zum Einsatz kommen kann. Stickoxid-Durchbrüche während des ECE und damit eine Überschreitung der vorgeschriebenen NOₓ-Grenzwerte im Gesamtfahrzyklus NEDC sind die Folge.

Aufgabe der vorliegenden Erfindung ist es, einen Katalysator und ein Abgasreinigungsverfahren zur Verfügung zu stellen, das gegenüber den Systemen aus dem Stand der Technik eine verbesserte NOₓ-Konvertierungsleistung im gesamten NEDC-relevanten Temperaturbereich, insbesondere aber bei tieferen Temperaturen z.B. zwischen 100 und 250°C zeigt.

Die Aufgabe wird gelöst durch einen Katalysator zur Entfernung von Stickoxiden aus dem Abgas von Dieselmotoren bestehend aus einem Tragkörper der Länge L und einer katalytisch aktiven Beschichtung aus einer oder mehreren Materialzonen enthaltend:
- einen Zeolith oder eine zeolithähnliche Verbindung enthaltend 1 - 10 Gew.-% Kupfer, bezogen auf das Gesamtgewicht des Zeolithen bzw. der zeolithähnlichen Verbindung, wobei der Zeolith bzw. die zeolithähnliche Verbindung ausgewählt ist aus der Gruppe bestehend aus Chabazit, SAPO-34, ALPO-34 und Zeolith β; und
- mindestens eine Verbindung ausgewählt aus der Gruppe bestehend aus Bariumoxid, Bariumhydroxid, Bariumcarbonat, Strontiumoxid, Strontiumhydroxid, Strontiumcarbonat, Praseodymoxid, Lanthanoxid, Magnesiumoxid, Magnesium/Aluminium-Mischoxid, Alkalimetalloxid, Alkalimetallhydroxid, Alkalimetallcarbonat und Mischungen davon,
sowie durch ein Verfahren zur Entfernung von Stickoxiden aus dem Abgas von Dieselmotoren, wobei das zu reinigende Abgas eine Luftzahl λ aufweist, die größer als 1 ist und über einen erfindungsgemäßen Katalysator geleitet wird.

Die besondere Zusammensetzung des erfindungsgemäßen Katalysators bewirkt, daß die im zu reinigenden Abgas befindlichen Stickoxide bei Temperaturen, die geringer als oder gleich 200°C sind, im Katalysator in Form von Nitraten eingespeichert werden können. Dadurch werden Stickoxid-Durchbrüche im Katalysator in Temperaturbereichen, in denen eine Harnstoff-Dosierung noch nicht sinnvoll möglich ist, weitestgehend vermieden. Übersteigen die Abgastemperaturen 200°C, so daß eine dem Bedarf angepasste Dosierung des Reduktionsmittels Harnstoff kontrolliert möglich ist, werden die bei kälteren Temperaturen im Katalysator eingespeicherten Stickoxide wieder freigesetzt und selektiv mit Ammoniak zu Stickstoff reduziert. Infolge des synergistischen Zusammenwirkens der im Katalysator enthaltenen Komponenten wird somit die NOₓ-Konvertierung im gesamten im NEDC-relevanten Temperaturbereich, insbesondere aber bei tieferen Temperaturen z.B. zwischen 100 und 250°C im Vergleich zu Systemen nach dem Stand der Technik deutlich gesteigert.

Bevorzugt weist der im erfindungsgemäßen Katalysator einzusetzende Zeolith bzw. die zeolithähnliche Verbindung eine durchschnittliche Porengröße von kleiner 4 Ångström auf und ist ausgewählt aus der Gruppe bestehend aus Chabazit, SAPO-34 und ALPO-34. Zeolithe bzw. zeolithähnliche Verbindungen dieses Typs haben den Vorteil, daß die in ihnen vorhandenen Poren zwar groß genug sind, um Ammoniak und/oder Stickoxide einspeichern zu können. Die im zu reinigenden Abgas gegebenenfalls ebenfalls vorhandenen kurzkettigen Kohlenwasserstoffe können infolge der geringen Porengrößen jedoch nicht in das Porengerüst des Zeolithen bzw. der zeolithähnlichen Verbindung eingelagert werden. Ein reversible Blockade sowohl der Speicherplätze für Ammoniak und/oder Stickoxide als auch der im Zeolithen bzw. in der zeolithähnlichen Verbindung enthaltenen SCR-katalytisch aktiven Zentren durch Kohlenwasserstoffe wird somit effektiv vermieden. Dies bewirkt, daß der resultierende Katalysator sich unter anderem durch ein hervorragendes Anspringverhalten in der SCR-Reaktion auch bei erhöhten Kohlenwasserstoffkonzentrationen im Abgas auszeichnet.

Desweiteren enthält die katalytisch aktive Beschichtung in bevorzgten Ausführungsformen des erfindungsgemäßen Katalysators zusätzlich Ceroxid und/oder Cer/Zirkon-Mischoxid. Ceroxide bzw. Cer/Zirkon-Mischoxide - insbesondere, wenn sie Cer-reich sind, d.h. Ceroxid-Gehalte größer 40 Gew.-%, besonders bevorzugt größer 60 Gew.-%, jeweils bezogen auf das Gesamtgewicht des Cer/Zirkon-Mischoxids, aufweisen - wirken promotierend auf die Stickoxid-Speicherfähigkeit im Tieftemperaturbereich bis 200°C. Um einen besonders innigen Kontakt zu anderen, Stickoxide speichernden Materialien im erfindungsgemäßen Katalysator zu gewährleisten, wird ganz besonders bevorzugt das Ceroxid und/oder Cer/Zirkon-Mischoxid als Trägeroxid für die Verbindung ausgewählt aus der Gruppe bestehend aus Bariumoxid, Bariumhydroxid, Bariumcarbonat, Strontiumoxid, Strontiumhydroxid, Strontiumcarbonat, Praseodymoxid, Lanthanoxid, Magnesiumoxid, Magnesium/Aluminium-Mischoxid, Alkalimetalloxid, Alkalimetallhydroxid, Alkalimetallcarbonat und Mischungen eingesetzt. Dadurch wird die Fähigkeit des erfindungsgemäßen Katalysators, im Tieftemperaturbereich bis 200°C dynamisch Stickoxide in Form von Nitraten einzuspeichern und diese bei höheren Temperaturen rasch wieder abzugeben, deutlich verbessert.

Sowohl die Geschwindigkeit der SCR-Reaktion als auch die Effektivität der Speicherung von Stickoxiden in Form von Nitraten ist abhängig vom NO/NO₂-Verhältnis im zu reinigenden Abgas. Beispielsweise läuft die SCR-Reaktion am schnellsten ab, wenn das NO/NO₂-Verhältnis um 1 liegt. Die Einspeicherung der Stickoxide in Form von Nitraten verläuft bei einigen speichernden Materialien wie beispielsweise Bariumoxid am schnellsten, wenn möglichst viel des im Abgas vorhandenen NO zuvor zu NO₂ oxidiert wurde. Bei beiden Reaktionen kann die Einstellung des NO/NO₂-Verhältnisses in situ an der Katalysatoroberfläche in einem der eigentlichen Zielreaktion vorgelagerten Schritt erfolgen. Hierzu enthalten bevorzugte Ausführungsformen des erfindungsgemäßen Katalysators in der katalytisch aktiven Beschichtung zusätzlich ein oder mehrere Edelmetalle, die ausgewählt sind aus der Gruppe bestehend aus Platin, Palladium, Rhodium, Iridium, Ruthenium, Gold, Silber und Mischungen und/oder Legierungen davon. Besonders bevorzugt sind die Platingruppenmetalle Platin, Palladium, Rhodium, Ruthenium und Mischungen und/oder Legierungen davon. Die in der katalytischen Beschichtung einzusetzenden Edelmetalle sind in ihrer Art und Menge so zu wählen, daß der resultierende Katalysator im anwendungsrelevanten Temperaturbereich keine signifikante Ammoniakoxidationsfähigkeit aufweist. Die zu bevorzugende Auswahl an Edelmetallen und ihre Konzentration wird auch von der Gesamtzusammensetzung des Katalysators mitbestimmt und erschließt sich dem Fachmann aus den für ihn üblichen Optimierungsversuchen.

Die im Katalysator enthaltenen Komponenten können in einer homogenen Beschichtung auf dem Tragkörper vorliegen. In Applikationen, in denen der erfindungsgemäße Katalysator bis zum Ende seiner bestimmungsgemäßen Nutzung moderaten Abgastemperaturen ausgesetzt ist und/oder in denen dem erfindungsgemäßem Katalysator ein hinreichend dimensionierter Ammoniak-Sperrkatalysator nachgeschaltet ist, werden mit solchen Ausführungsformen gute Entstickungserfolge erzielt.

Bevorzugt werden jedoch Ausführungsformen, in denen die katalytisch aktive Beschichtung aus zwei Materialzonen besteht, wobei die erste Materialzone den Zeolithen bzw. die zeolithähnliche Verbindung umfasst, während die Verbindung ausgewählt aus der Gruppe bestehend aus Bariumoxid, Bariumhydroxid, Bariumcarbonat, Strontiumoxid, Strontiumhydroxid, Strontiumcarbonat, Praseodymoxid, Lanthanoxid, Magnesiumoxid, Magnesium/Aluminium-Mischoxid, Alkalimetalloxid, Alkalimetallhydroxid, Alkalimetallcarbonat und Mischungen davon in der zweiten Materialzone enthalten ist. Von besonderer Bedeutung ist die räumliche Separierung verschiedener, im Katalysator enthaltener Komponenten in zwei Materialzonen, aus denen sich die katalytisch aktive Beschichtung zusammensetzt, wenn die gewählte Ausführungsform Edelmetall enthält. In diesem Fall ist zu empfehlen, daß die erste Materialzone den Zeolithen bzw. die zeolithähnliche Verbindung umfasst, während das Edelmetall, das ausgewählt ist aus der Gruppe bestehend aus Platin, Palladium, Rhodium, Iridium, Ruthenium, Gold, Silber und Mischungen und/oder Legierungen davon, in der zweiten Materialzone enthalten ist. Durch die räumliche Separierung des Edelmetalls und des Zeolithen bzw. der zeolithähnlichen Verbindung wird erreicht, daß der erfindungsgemäße Katalysator auch bei höheren Abgastemperaturen in der SCR-Reaktion eine hervorragende Selektivität zu Stickstoff aufweist. Infolgedessen wird unter geeigneten Betriebsbedingungen wenig NOₓ aus der Überoxidation von überschüssigem Ammoniak gebildet.

Ausführungsformen des erfindungsgemäßen Katalysators, in denen zwei verschiedene Materialzonen vorliegen, können grundsätzlich als Schichtkatalysatoren oder als Zonenkatalysatoren ausgestaltet sein. Zur Herstellung solcher Katalysatoren werden zwei unterschiedlich zusammengesetzte Beschichtungssuspensionen verwendet, um einen als Tragkörper bevorzugt verwendeten Durchflußwabenkörper aus Keramik oder Metall mit den entsprechenden katalytisch aktiven Teilbeschichtungen, die die Materialzonen ausbilden, zu versehen.

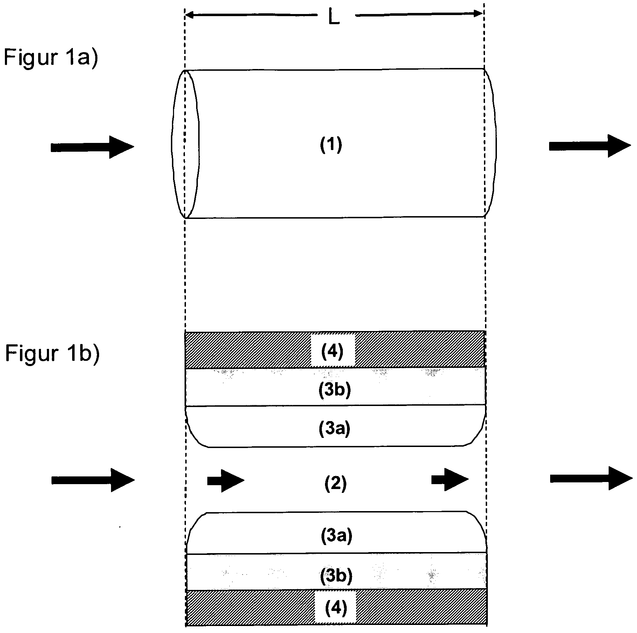

Zur Herstellung eines Schichtkatalysator wird zunächst eine katalytisch aktive Schicht mit einer entsprechend zusammengesetzten Beschichtungssuspension nach einem der herkömmlichen Tauch-, Saug- und/oder Pump-Verfahren über die gesamte Länge des Tragkörpers aufgebracht. Nach Trocknung und gegebenenfalls Kalzination dieser ersten Schicht wird der Vorgang mit einer zweiten, anders zusammengesetzten Beschichtungssuspension wiederholt, so daß sich eine zweite katalytisch aktive Teilbeschichtung (Materialzone) auf der ersten katalytisch aktiven Teilbeschichtung ausbildet. Im fertigen Schichtkatalysator ist somit eine Materialzone unmittelbar auf dem Tragkörper aufgebracht und überdeckt dessen gesamte Länge L. Die andere Materialzone ist darüber aufgebracht und überdeckt jene Materialzone abgasseitig vollständig. Figur 1 zeigt schematisch den Aufbau eines solchen Schichtkatalysators, wobei in Figur 1a) eine Übersichtsansicht des beschichteten Durchflußwabenkörpers (1) dargestellt ist: Figur 1b zeigt schematisch einen einzelnen Strömungskanal (2) als Ausschnitt aus dem Schichtkatalysator. Darin sind die zwei übereinander liegenden Materialzonen (3a und 3b) auf den den Strömungskanal begrenzenden, gasdichten Wänden (4) angeordnet, aus denen sich die katalytisch aktive Beschichtung bevorzugter Ausführungsformen des erfindungsgemäßen Katalysators zusammensetzt. Die Pfeile zeigen die Strömungsrichtung des zu reinigenden Abgases an.

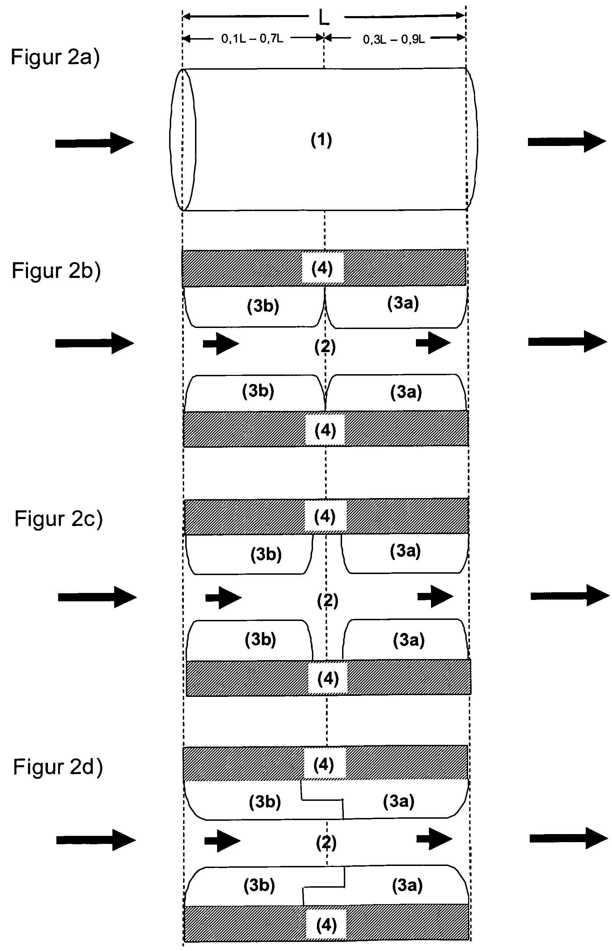

In einem Zonenkatalysator sind die beiden Materialzonen in Strömungsrichtung des Abgases nacheinander auf dem Tragkörper angeordnet und bilden eine anströmseitige und eine abströmseitige Zone aus. Zur Herstellung der ersten Zone wird eine Beschichtungssuspension geeigneter Zusammensetzung mit einem der herkömmlichen Tauch-, Saug- und/oder Pumpverfahren beispielsweise von der späteren Anströmseite des Katalysators aus in den als Tragkörper bevorzugt genutzten Durchflußwabenkörper aus Keramik oder Metall eingebracht. Die Aufbringung endet jedoch nach einer definierten Strecke im Tragkörper, die kleiner ist, als die Länge des Tragkörpers L. Nach Trocknung und gegebenenfalls Kalzination des resultierenden Teils wird zur Herstellung der zweiten Zone ausgehend von der anderen Seite - beispielsweise der späteren Abströmseite der Katalysators - die zweite Beschichtungssuspension eingebracht. Ihre Aufbringung endet ebenfalls nach einer definierten Strecke im Tragkörper, die kleiner ist, als die Länge L des Tragkörpers. Figur 2 zeigt schematisch den Aufbau eines solchen Zonenkatalysators, wobei in Figur 2a) eine Übersichtsansicht des beschichteten Durchflußwabenkörpers (1) dargestellt ist. Die Figuren 2b bis 2d zeigen schematisch einen einzelnen Strömungskanal (2) als Ausschnitt aus dem Zonenkatalysator und die darin auf den den Strömungskanal begrenzenden gasdichten Wänden (4) angeordneten Teilbeschichtungen (Materialzonen). Die Länge der Zonen kann bei der Beschichtung so gewählt werden, daß sich die Materialzonen an einem gewählten Punkt auf einem Teillängenstück des Tragkörpers berühren ("Zonen auf Stoß"; Figur 2b). Ebenso besteht die Möglichkeit, die Zonenlängen so zu wählen, daß es im Zwischenbereich zu einer Überlappung kommt (Figur 2d). Bevorzugt werden die Zonenlängen so gewählt, daß zwischen den beiden Materialzonen eine Lücke verbleibt (Figur 2c). Die Lücke ist bevorzugt zwischen 2 und 10 Millimeter, besonders bevorzugt zwischen 3 und 6 Millimeter lang. Diese Ausführungsform hat insbesondere bei edelmetallhaltigen Varianten des erfindungsgemäßen Katalysators Vorteile, da hierin der innige Kontakt zwischen dem in der einen Materialzonen enthaltenen Edelmetall und dem in der anderen Materialzone enthaltenen Zeolithen bzw. der zeolithähnlichen Verbindung vollständig unterbunden ist. Dadurch wird der thermisch diffusive Übertritt des Edelmetalls in den Zeolithen bzw. die zeolithähnliche Verbindung verhindert, was im Ergebnis zu einer höheren Selektivität zu Stickstoff des resultierenden Katalysators führt.

In den bevorzugten Ausführungsformen des erfindungsgemäßen Schichtkatalysators ist die zweite Materialzone, die die Verbindung ausgewählt aus der Gruppe bestehend aus Bariumoxid, Bariumhydroxid, Bariumcarbonat, Strontiumoxid, Strontiumhydroxid, Strontiumcarbonat, Praseodymoxid, Lanthanoxid, Magnesiumoxid, Magnesium/Aluminium-Mischoxid, Alkalimetalloxid, Alkalimetallhydroxid, Alkalimetallcarbonat und Mischungen davon und/oder Edelmetall enthält, unmittelbar auf den Tragkörper aufgebracht und überdeckt diesen über dessen gesamte Länge L. Die erste Materialzone enthaltend den Cu-haltigen Zeolithen bzw. die zeolithähnliche Verbindung ist auf die zweite Materialzone aufgebracht und überdeckt diese abgasseitig vollständig. Diese Anordung der Materialzonen bedingt, daß Stickoxide, die aus der zweiten Materialzone desorbiert werden, in der darüber liegenden SCR-aktiven-Materialzone mit Ammoniak zu Stickstoff umgesetzt werden können.

In den bevorzugten Ausführungsformen des erfindungsgemäßen Zonenkatalysators, worin beide Materialzonen in Strömungsrichtung des Abgases nacheinander auf dem Tragkörper angeordnet sind, überdeckt die zweite Materialzone 10 bis 70 % der Länge L des Tragkörpers, gerechnet ab dessen anströmseitigem Ende, während die erste Materialzone 30 bis 90 % der Länge L des Tragkörpers überdeckt, gerechnet ab dessen abströmseitigen Ende. Diese Anordnung hat ebenfalls den Vorteil, daß Stickoxide, die aus der Stickoxide speichernden, zweiten Materialzone desorbiert werden, an der abströmseitig nachgeordneten ersten Materialzone mit Ammoniak zu Stickstoff umgesetzt werden können. Zudem ist durch die anströmseitige Anordnung der zweiten Materialzone ein maximal mögliches Temperaturniveau im Katalysator gewährleistet, was insgesamt zu optimalen, d.h. gegenüber der inversen Anordnung verbesserten NOx-Speicherraten der zweiten Materialzone führt. Als weiterer Vorteil dieser Anordnung ist eine verbesserte Ammoniakspeicherfähigkeit der abströmseitig nachgeordneten SCR-aktiven, ersten Materialzone zu beobachten. Es ist jedoch auch möglich, die Zonen umgekehrt anzuordnen, so daß die erste Materialzone, die den Zeolithen bzw. die zeolithähnliche Verbindung enthält, anströmseitig angeordnet ist, während die zweite Materialzone abströmseitig angeordnet ist. In diesem Fällen wird dem erfindungsgemäßen Katalysator jedoch bevorzugt ein zusätzlicher SCR-Katalysator im Abgasreinigungssystem nachgeschaltet. Dadurch entsteht eine Vorrichtung, die neben einem erfindungsgemäßen Katalysator einen SCR-Katalysator umfasst, der absrömseitig zum erfindungsgemäßen Katalysator angeordnet ist.

Der erfindungsgemäße Katalysator eignet sich zur Entfernung von Stickoxiden aus dem Abgas von Dieselmotoren. Obgleich der Katalysator die Fähigkeit besitzt, Stickoxide einspeichern zu können, wird er nicht zyklisch in wechselweise fettem und mageren Abgas betrieben. Das zu reinigende Abgas weist eine Luftzahl λ auf, die größer 1 ist, und wird zur Entstickung über den erfindungsgemäßen Katalysator geleitet. Bevorzugt wird dem zu reinigenden Abgas vor Eintritt in den Katalysator Ammoniak oder eine zu Ammoniak zersetzliche Verbindung als Reduktionsmittel aus einer vom Motor unabhängigen Quelle zugeführt. Besonders bevorzugt ist der Einsatz von Harnstoff als zu Ammoniak zersetzlicher Verbindung, wobei dieser dem zu reinigenden Abgas erst dann zugeführt wird, wenn die Temperaturen höher als oder gleich 180°C sind. Bei Temperaturen, die geringer als oder gleich 200°C sind, speichert der erfindungsgemäße Katalysator, über den das zu reinigende Abgas geleitet wird, Stickoxide in Form von Nitraten ein. Bei Temperaturen, die höher als 200°C sind, werden diese Stickoxide wieder freigesetzt. Noch am erfindungsgemäßen Katalysator erfolgt deren selektive katalytische Reduktion mit Ammoniak zu Stickstoff.

Je nach Anwendungsfall kann es vorteilhaft sein, das zu reinigende Abgas zusätzlich über einen Katalysator zu leiten, der überwiegend die selektive katalytische Reduktion von Stickoxiden mit Ammoniak beschleunigt. Die ergänzende Nachbehandlung über einem SCR-Katalysator ist beispielsweise dann sinnvoll, wenn die Gefahr besteht, daß Stickoxide in speziellen Betriebspunkten durch den erfindungsgemäßen Katalysator durchbrechen bzw. aus dem im erfindungsgemäßen Katalysator vorhandenen Stickoxid-Speicher freigesetzt werden, ohne daß noch am erfindungsgemäßen Katalysator eine hinreichende Reduktion der Stickoxide zu Stickstoff erfolgen kann. Dieser Fall kann beispielsweise eintreten, wenn Ausgestaltungen des erfindungsgemäßen Katalysators zum Einsatz kommen, in denen der Zeolith bzw. die zeolithähnliche Verbindung in der anströmseitigen Zone eingesetzt wird. Ebenso könnte Bedarf für eine entsprechende Systemgestaltung entstehen, wenn der Zeolith bzw. die zeolithähnliche Verbindung zwar in der abströmseitigen Zone vorhanden, die entsprechende Materialzone aber vergleichsweise kurz dimensioniert ist. In solchen Fällen ist die Integration des erfindungsgemäßen Katalysators in ein Abgassystem geboten, das - neben anderen Abgasreinigungsaggregaten wie beispielsweise Dieseloxidationskatalysator und/oder Dieselpartikelfilter - eben auch weitere Entstickungskatalysatoren, vorzugsweise SCR-Katalysatoren enthalten kann.

Die Erfindung wird im folgenden anhand einiger Figuren und eines Ausführungsbeispiels näher erläutert. Es zeigen:
- **Figur 1:**: Schematische Darstellung eines erfindungsgemäßen Schichtkatalysators umfassend einen Durchflußwabenkörper (1) und die katalytisch aktive Beschichtung (3), die aus zwei übereinander liegenden Materialzonen (3a und 3b) aufgebaut ist.
Materialzone (3a) enthält einen Zeolithen bzw. eine zeolithähnliche Verbindung, ausgewählt aus der Gruppe bestehend aus Chabazit, SAPO-34, ALPO-34 und Zeolith β, und enthaltend 1 - 10 Gew.-% Kupfer, bezogen auf das Gesamtgewicht des Zeolithen bzw. der zeolithähnlichen Verbindung.
Materialzone (3b) enthält mindestens eine Verbindung ausgewählt aus der Gruppe bestehend aus Bariumoxid, Bariumhydroxid, Bariumcarbonat, Strontiumoxid, Strontiumhydroxid, Strontiumcarbonat, Praseodymoxid, Lanthanoxid, Magnesiumoxid, Magnesium/Aluminium-Mischoxid, Alkalimetalloxid, Alkalimetallhydroxid, Alkalimetallcarbonat und Mischungen davon.
Figur 1b) zeigt einen Ausschnitt aus dem beschichteten Durchflußwabenkörper umfassen einen einzelnen Strömungskanal (2), auf dessen gasdichten Wänden (4) die Beschichtung aufgebracht ist.
- **Figur 2:**: Schematische Darstellung eines erfindungsgemäßen Zonenkatalysators umfassend einen Durchflußwabenkörper (1) und die katalytisch aktive Beschichtung (3), die aus zwei übereinander liegenden Materialzonen (3a und 3b) aufgebaut ist.
Materialzone (3a) enthält einen Zeolithen bzw. eine zeolithähnliche Verbindung, ausgewählt aus der Gruppe bestehend aus Chabazit, SAPO-34, ALPO-34 und Zeolith β, und enthaltend 1 - 10 Gew.-% Kupfer, bezogen auf das Gesamtgewicht des Zeolithen bzw. der zeolithähnlichen Verbindung.
Materialzone (3b) enthält mindestens eine Verbindung ausgewählt aus der Gruppe bestehend aus Bariumoxid, Bariumhydroxid, Bariumcarbonat, Strontiumoxid, Strontiumhydroxid, Strontiumcarbonat, Praseodymoxid, Lanthanoxid, Magnesiumoxid, Magnesium/Aluminium-Mischoxid, Alkalimetalloxid, Alkalimetallhydroxid, Alkalimetallcarbonat und Mischungen davon.
Figur 2b) bis 2d) zeigen einen einzelnen Strömungskanal (2) als Ausschnitt aus dem Zonenkatalysator und die darin auf den den Strömungskanal begrenzenden gasdichten Wänden (4) angeordneten Materialzonen in verschiedenen Ausführungsformen:
Figur 2b): "Zonen auf Stoß";
Figur 2c): Zonenbeschichtung mit freibleibender Lücke;
Fibur 2d): Beschichtung mit einander überlappenden Zonen.

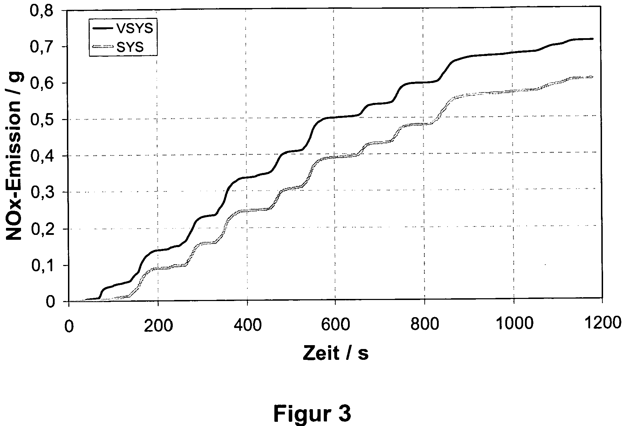

- **Figur 3:**: Kumulierte Stickoxid-Emissionen eines Systems nach dem Stand der Technik VSYS enthaltend zwei hintereinander geschaltete konventionelle SCR-Katalysatoren und eines Testsystems SYS enthaltend einen erfindungsgemäßen Katalysator und einen nachgeschalteten konventionellen SCR-Katalysator in einem simulierten NEDC-Testzyklus.

### Ausführungsbeispiel:

Es wurde ein erfindungsgemäßer Katalysator in Form eines Schichtkatalysators gemäß Figur 1 hergestellt.

Zur Herstellung der auf den Durchflußwabenkörper direkt aufzubringenden, zweiten Materialzone (3b) wurde eine Beschichtungssuspension mit der folgenden Zusammensetzung angefertigt (die Mengenangaben beziehen sich auf das Volumen L des resultierenden Katalysators):

| | | |
|---|---|---|
| 45 | g/L | eines Lanthan-dotierten Aluminium/Cer-Mischoxids; |
| 71 | g/L | eines Ceroxid-dotierten Aluminium/Magnesium-Mischoxids; |
| 1,06 | g/L | Palladium als Palladiumnitratlösung; |
| 36 | g/L | mit 16,67 Gew.-% BaO belegtes Cer/Zirkon-Mischoxid ; |
| 66 | g/L | Ceroxid; |

Alle eingesetzten Rohstoffe sind kommerziell erhältlich.
Lediglich bei dem mit Bariumoxid belegten Cer/Zirkon-Mischoxid handelt es sich um eine selbsthergestellte Pulverkomponente. Zu ihrer Herstellung wurde ein kommerziell erhältliches Cer/Zirkon-Mischoxid in einer wässrigen Bariumacetatlösung aufgeschlämmt. Die so erhaltene Suspension wurde bei 120°C über die Dauer von 10 h aufgetrocknet und anschließend bei 500°C für 2 Stunden kalziniert. Das so erhaltene Pulver wurde vermahlen und zur Herstellung der Beschichtungssuspension eingesetzt.

Mit der so erhaltenen Beschichtungssuspension wurde ein Durchflußwabenkörper mit 62 Zellen pro Quadratzentimeter, einer Zellwandstärke von 0,165 Millimetern und einer Länge von 76,2 mm in einem üblichen und dem Fachmann bekannten Tauchbeschichtungsverfahren beschichtet. Das Bauteil wurde getrocknet und bei 500°C für die Dauer von 2 Stunden kalziniert.

Für die Herstellung der ersten Materialzone (3a) wurde die Beschichtungssuspension für einen kommerziell erhältlichen SCR-Katalysator enthaltend 38 g/L mit 3,5 Gew.-% Kupfer ausgetauschtes SAPO-34 sowie 13 g/L eines kommerziell erhältlichen, mit Lanthansesquioxid dotierten Cer/Zirkon-Mischoxides hergestellt. Mit dieser Suspension wurde der wie vorstehend beschrieben bereits einfach beschichtete Durchflußwabenkörper ein weiteres Mal beschichtet. Das so erhaltene Bauteil wurde nach Trocknung bei 500°C für die Dauer von 2 Stunden kalziniert.

### Vergleichsbeispiel:

Als Vergleichskatalysator wurde ein kommerziell erhältlicher SCR-Katalysator eingesetzt, der als Aktivkomponenten ein mit 3,5 Gew.-% Kupfer ausgetauschtes SAPO-34 und ein kommerziell erhältliches, mit Lanthansesquioxid dotiertes Cer/Zirkon-Mischoxid enthielt und dessen Zusammensetzung der ersten Materialzone (3a) im erfindungsgemäßen Katalysator entsprach. Die Gesamtbeladung des Vergleichskatalysators betrug 176 g/L Washcoat, bezogen auf das Volumen des Gesamtkatalysators. Der im Katalysator eingesetzte Durchflußwabenkörper wies 62 Zellen pro Quadratzentimeter, eine Zellwandstärke von 0,165 Millimetern und eine Länge von 76,2 mm auf.

Der erfindungsgemäße Katalysator und der Vergleichskatalysator wurden hinsichtlich ihrer NOₓ-Konvertierungsleistung im NEDC-relevanten Temperaturbereich getestet. Dazu wurde dem Katalysator ein Bohrkern K1 mit einem Durchmesser von 38,1 mm entnommen. Dem Vergleichskatalysator wurden drei Bohrkerne VK1, VK2 und VK3 entnommen.

Vor Bestimmung ihrer Stickoxidkonvertierungsleistung wurden die Bohrkerne zur synthetischen Alterung über die Dauer von 16 Stunden bei 750°C in einer Atmosphäre enthaltend 10 Vol.-% Sauerstoff und 10 Vol.-% Wasserdampf in Stickstoff gelagert.

In einer dynamischen Labor-Modellgasanlage wurden jeweils zwei zu einem Abgasreinigungssystem hintereinandergeschaltete Bohrkerne hinsichtlich ihrer Stickoxidkonvertierungsleistung untersucht (die angegebene Reihenfolge entspricht (von links nach rechts) der Strömungsrichtung des Testgases:

| | |
|---|---|
| Vergleichssystem VSYS: | VK1 + VK2 |
| Testsystem SYS gemäß Erfindung: | K + VK3. |

Die jeweilige Konfiguration wurde in einem NEDC-Simulationstest getestet. Dabei wurden der Testgasmassenstrom, das Temperaturprofil und die Testgaszusammensetzung den Emissionen eines Euro-V-zertifizierten Dieselmotors mit einem Hubraum von drei Litern angepasst. Das das entsprechende Abgas simulierende Testgas enthielt die Komponenten Stickstoffmonoxid (NO), Stickstoffdioxid (NO₂), Sauerstoff (O₂), Kohlendioxid (CO₂), Wasserdampf (H₂O) und Stickstoff (N₂). Statt Harnstoff wurde als Reduktionsmittel Ammoniak eindosiert, wobei das gewählte Verhältnis α = NH₃/NOₓ = 1 betrug. Für den notwendigen "Scale-down" des Abgasmassenstromes wurde ein Auslegungsvolumen des eingesetzten SCR-Katalysators von 4 Litern angenommen.

Im beschriebenen Test wurde für das Vergleichssystem VSYS eine Emission im NEDC von 65 mg/km ermittelt. Das den erfindungsgemäßen Katalysator enthaltene Testsystem SYS zeigte eine demgegenüber um 15 % verringerte Stickoxid-Emission, nämlich 55 mg/km.

Figur 3 zeigt die kumulierten Emissionen des Testsystems SYS und des Vergleichssystems VSYS über den gesamten Testverlauf. Die genaue Betrachtung der kumulierten Emissionsverläufe macht deutlich, daß der erfindungsgemäße Katalysator insbesondere im Kaltstartbereich bis ca. 150 Sekunden Testzeit eine erheblich verbesserte Reinigungswirkung aufweist. Darüber hinaus ist über den gesamten Text eine verringerte kumulierte NOₓ-Emission zu beobachten.

## Patentansprüche

1. Katalysator zur Entfernung von Stickoxiden aus dem Abgas von Dieselmotoren bestehend aus einem Tragkörper der Länge L und einer katalytisch aktiven Beschichtung aus einer oder mehreren Materialzonen enthaltend:
• einen Zeolith oder eine zeolithähnliche Verbindung enthaltend 1 - 10 Gew.-% Kupfer, bezogen auf das Gesamtgewicht des Zeolithen bzw. der zeolithähnlichen Verbindung, wobei der Zeolith bzw. die zeolithähnliche Verbindung ausgewählt ist aus der Gruppe bestehend aus Chabazit, SAPO-34, ALPO-34 und Zeolith β; und
• mindestens eine Verbindung ausgewählt aus der Gruppe bestehend aus Bariumoxid, Bariumhydroxid, Bariumcarbonat, Strontiumoxid, Strontiumhydroxid, Strontiumcarbonat, Praseodymoxid, Lanthanoxid, Magnesiumoxid, Magnesium/Aluminium-Mischoxid, Alkalimetalloxid, Alkalimetallhydroxid, Alkalimetallcarbonat und Mischungen davon.

2. Katalysator nach Anspruch 1,
**dadurch gekennzeichnet,**
**daß** der Zeolith bzw. die zeolithähnliche Verbindung eine durchschnittliche mittlere Porengröße kleiner 4 Ängström aufweist und ausgewählt ist aus der Gruppe bestehend aus Chabazit, SAPO-34 und ALPO-34.

3. Katalysator nach Anspruch 1 oder 2,
**dadurch gekennzeichnet,**
**daß** die katalytisch aktive Beschichtung zusätzlich Ceroxid und/oder Cer/Zirkon-Mischoxid enthält.

4. Katalysator nach Anspruch 3,
**dadurch gekennzeichnet,**
**daß** das Ceroxid und/oder Cer/Zirkon-Mischoxid ein Trägeroxid für die Verbindung ausgewählt aus der Gruppe bestehend aus Bariumoxid, Bariumhydroxid, Bariumcarbonat, Strontiumoxid, Strontiumhydroxid, Strontiumcarbonat, Praseodymoxid, Lanthanoxid, Magnesiumoxid, Magnesium/Aluminium-Mischoxid, Alkalimetalloxid, Alkalimetallhydroxid, Alkalimetallcarbonat und Mischungen davon ist.

5. Katalysator nach einem der vorstehenden Ansprüche,
**dadurch gekennzeichnet,**
**daß** die katalytisch aktive Beschichtung zusätzlich ein oder mehrere Edelmetalle enthält, die ausgewählt sind aus der Gruppe bestehend aus Platin, Palladium, Rhodium, Iridium, Ruthenium, Gold, Silber und Mischungen und/oder Legierungen davon.

6. Katalysator nach einem der Ansprüche 1 bis 4,
**dadurch gekennzeichnet,**
**daß** die katalytisch aktive Beschichtung aus zwei Materialzonen besteht, wobei die erste Materialzone den Zeolithen bzw. die zeolithähnliche Verbindung umfasst, während die Verbindung ausgewählt aus der Gruppe bestehend aus Bariumoxid, Bariumhydroxid, Bariumcarbonat, Strontiumoxid, Strontiumhydroxid, Strontiumcarbonat, Praseodymoxid, Lanthanoxid, Magnesiumoxid, Magnesium/Aluminium-Mischoxid, Alkalimetalloxid, Alkalimetallhydroxid, Alkalimetallcarbonat und Mischungen davon in der zweiten Materialzone enthalten ist.

7. Katalysator nach Anspruch 5,
**dadurch gekennzeichnet,**
**daß** die katalytisch aktive Beschichtung aus zwei Materialzonen besteht, wobei die erste Materialzone den Zeolithen bzw. die zeolithähnliche Verbindung umfasst, während das Edelmetall, das ausgewählt sind aus der Gruppe bestehend aus Platin, Palladium, Rhodium, Iridium, Ruthenium, Gold, Silber und Mischungen und/oder Legierungen davon, in der zweiten Materialzone enthalten ist.

8. Katalysator nach Anspruch 6 oder 7,
**dadurch gekennzeichnet,**
**daß** die zweite Materialzone unmittelbar auf den Tragkörper aufgebracht ist und diesen über dessen gesamte Länge L überdeckt, während die erste Materialzone auf die zweite Materialzone aufgebracht ist und diese abgasseitig vollständig überdeckt.

9. Katalysator nach Anspruch 6 oder 7,
**dadurch gekennzeichnet,**
**daß** beide Materialzonen in Strömungsrichtung des Abgases nacheinander auf dem Tragkörper angeordnet sind, wobei die zweite Materialzone 10 bis 70 % der Länge L des Tragkörpers, gerechnet ab dem anströmseitigen Ende des Tragkörpers, überdeckt, während die erste Materialzone 30 - 90 % der Länge L des Tragkörpers, gerechnet ab dem abströmseitigen Ende des Tragkörpers, überdeckt.

10. Verfahren zur Entfernung von Stickoxiden aus dem Abgas von Dieselmotoren,
**dadurch gekennzeichnet,**
**daß** das zu reinigende Abgas eine Luftzahl λ aufweist, die größer als 1 ist und über einen Katalysator nach einem der Ansprüche 1 bis 9 geleitet wird.

11. Verfahren nach Anspruch 10,
**dadurch gekennzeichnet,**
**daß** dem zu reinigenden Abgas vor Eintritt in den Katalysator Ammoniak oder eine zu Ammoniak zersetzliche Verbindung als Reduktionsmittel aus einer vom Motor unabhängigen Quelle zugeführt wird.

12. Verfahren nach Anspruch 11,
**dadurch gekennzeichnet,**
**daß** als zu Ammoniak zersetzliche Verbindung Harnstoff eingesetzt wird, wobei dieser dem zu reinigenden Abgas nur bei Temperaturen, die höher als oder gleich 180°C sind, zugeführt wird.

13. Verfahren nach Anspruch 12,
**dadurch gekennzeichnet,**
**daß** der Katalysator, über den das zu reinigende Abgas geleitet wird, bei Temperaturen, die geringer als oder gleich 200°C sind, Stickoxide in Form von Nitraten einspeichert, diese bei Temperaturen, die höher als 200°C sind, wieder freisetzt und zugleich deren selektive katalytische Reduktion mit Ammoniak katalysiert.

14. Verfahren nach einem der Ansprüche 10 bis 13,
**dadurch gekennzeichnet,**
**daß** das zu reinigende Abgas zusätzlich über einen Katalysator geleitet wird, der überwiegend die selektive katalytische Reduktion von Stickoxiden mit Ammoniak beschleunigt.

15. Vorrichtung zur Durchführung des Verfahrens nach Anspruch 14 enthaltend einen Katalysator nach einem der Ansprüche 1 bis 8 und einen abströmseitig dazu angeordneten SCR-Katalysator.

## Claims

1. Catalytic converter for removing nitrogen oxides from the exhaust gas of diesel engines, made up of a supporting body of length L and a catalytically active coating composed of one or more material zones, comprising:
• a zeolite or a zeolite-like compound containing 1 - 10 wt. % copper relative to the total weight of the zeolite or the zeolite-like compound, wherein the zeolite or the zeolite-like compound is selected from the group consisting of chabazite, SAPO-34, ALPO-34, and zeolite β; and
• at least one compound selected from the group consisting of barium oxide, barium hydroxide, barium carbonate, strontium oxide, strontium hydroxide, strontium carbonate, praseodymium oxide, lanthanum oxide, magnesium oxide, magnesium/aluminum mixed oxide, alkali metal oxide, alkali metal hydroxide, alkali metal carbonate, and mixtures thereof.

2. Catalytic converter according to claim 1,
**characterized in that**
the zeolite or the zeolite-like compound has an average mean pore size smaller than 4 angstroms and is selected from the group consisting of chabazite, SAPO-34, and ALPO-34.

3. Catalytic converter according to claim 1 or 2,
**characterized in that**
the catalytically active coating additionally contains cerium oxide and/or cerium/zirconium mixed oxide.

4. Catalytic converter according to claim 3,
**characterized in that**
the cerium oxide and/or cerium/zirconium mixed oxide is a carrier oxide for the compound selected from the group consisting of barium oxide, barium hydroxide, barium carbonate, strontium oxide, strontium hydroxide, strontium carbonate, praseodymium oxide, lanthanum oxide, magnesium oxide, magnesium/aluminum mixed oxide, alkali metal oxide, alkali metal hydroxide, alkali metal carbonate, and mixtures thereof.

5. Catalytic converter according to one of the preceding claims,
**characterized in that**
the catalytically active coating additionally contains one or more noble metals which are selected from the group consisting of platinum, palladium, rhodium, iridium, ruthenium, gold, silver, and mixtures and/or alloys thereof.

6. Catalytic converter according to one of claims 1 through 4,
**characterized in that**
the catalytically active coating is made up of two material zones, wherein the first material zone comprises the zeolite or the zeolite-like compound, whereas the compound selected from the group consisting of barium oxide, barium hydroxide, barium carbonate, strontium oxide, strontium hydroxide, strontium carbonate, praseodymium oxide, lanthanum oxide, magnesium oxide, magnesium/aluminum mixed oxide, alkali metal oxide, alkali metal hydroxide, alkali metal carbonate, and mixtures thereof is contained in the second material zone.

7. Catalytic converter according to claim 5,
**characterized in that**
the catalytically active coating is made up of two material zones, wherein the first material zone comprises the zeolite or the zeolite-like compound, whereas the noble metal selected from the group consisting of platinum, palladium, rhodium, iridium, ruthenium, gold, silver, and mixtures and/or alloys thereof is contained in the second material zone.

8. Catalytic converter according to claim 6 or 7,
**characterized in that**
the second material zone is applied directly to the supporting body and covers it across its entire length L, whereas the first material zone is applied to the second material zone and covers it completely on the exhaust gas side.

9. Catalytic converter according to claim 6 or 7,
**characterized in that**
the two material zones are arranged on the supporting body one after the other in the flow direction of the exhaust gas, wherein the second material zone covers 10 to 70% of the length L of the supporting body, calculated from the upstream end of the supporting body, whereas the first material zone covers 30 - 90% of the length L of the supporting body, calculated from the downstream end of the supporting body.

10. Method for removing nitrogen oxides from the exhaust gas of diesel engines,
**characterized in that**
the exhaust gas to be purified has a fuel-air ratio λ that is greater than 1 and is guided across a catalytic converter according to one of the claims 1 through 9.

11. Method according to claim 10,
**characterized in that**
ammonia or a compound that can be decomposed to ammonia from a source that is independent of the engine is supplied as a reducing agent to the exhaust gas to be purified prior to its entry into the catalytic converter.

12. Method according to claim 11,
**characterized in that**
urea is used as the compound that can be decomposed to ammonia, wherein the urea is supplied to the exhaust gas to be purified only at temperatures that are greater than or equal to 180 °C.

13. Method according to claim 12,
**characterized in that**
at temperatures that are less than or equal to 200 °C, the catalytic converter across which the exhaust gas to be purified is guided stores nitrogen oxides in the form of nitrates, releases them again at temperatures that are greater than 200 °C, and at the same time catalyzes their selective catalytic reduction with ammonia.

14. Catalytic converter according to one of claims 10 through 13,
**characterized in that**
the exhaust gas to be purified is additionally guided across a catalytic converter that primarily accelerates the selective catalytic reduction of nitrogen oxides with ammonia.

15. Device for carrying out the method according to claim 14, comprising a catalytic converter according to one of claims 1 through 8 and an SCR catalytic converter arranged downstream thereof.

## Revendications

1. Catalyseur pour l'élimination d'oxydes d'azote des gaz d'échappement de moteurs Diesel, composé d'un corps de support de longueur L et d'un revêtement à action catalytique composé d'une ou de plusieurs zones de matériau, comprenant :
• une zéolite ou un composé semblable à la zéolite contenant entre 1 et 10 % en poids de cuivre, sur la base du poids total de la zéolite ou du composé semblable à la zéolite, dans lequel la zéolite ou le composé semblable à la zéolite est choisi dans le groupe constitué de chabazite, SAPO-34, ALPO-34 et zéolite β ; et
• au moins un composé choisi dans le groupe constitué d'oxyde de baryum, hydroxyde de baryum, carbonate de baryum, oxyde de strontium, hydroxyde de strontium, carbonate de strontium, oxyde de praséodyme, oxyde de lanthane, oxyde de magnésium, oxyde mélangé de magnésium/aluminium, oxyde de métal alcalin, hydroxyde de métal alcalin, carbonate de métal alcalin et leurs mélanges.

2. Catalyseur selon la revendication 1,
**caractérisé en ce**
**que** la zéolite ou le composé semblable à la zéolite a une grosseur intermédiaire moyenne des pores inférieure à 4 ångström et est choisi dans le groupe constitué de chabazite, SAPO-34 et ALOP-34.

3. Catalyseur selon la revendication 1 ou 2,
**caractérisé en ce**
**que** le revêtement à action catalytique contient en outre de l'oxyde de cérium et/ou de l'oxyde mélangé de cérium/zirconium.

4. Catalyseur selon la revendication 3,
que l'oxyde de cérium et/ou l'oxyde mélangé de cérium/zirconium est un oxyde porteur pour le composé choisi dans le groupe constitué d'oxyde de baryum, hydroxyde de baryum, carbonate de baryum, oxyde de strontium, hydroxyde de strontium, carbonate de strontium, oxyde de praséodyme, oxyde de lanthane, oxyde de magnésium, oxyde mélangé de magnésium/aluminium, oxyde de métal alcalin, hydroxyde de métal alcalin, carbonate de métal alcalin et leurs mélanges.

5. Catalyseur selon l'une quelconque des revendications précédentes,
**caractérisé en ce**
**que** le revêtement à action catalytique contient en outre un ou plusieurs métaux nobles, choisis dans le groupe constitué de platine, palladium, rhodium, iridium, ruthénium, or, argent et leurs mélanges et/ou alliages.

6. Catalyseur selon l'une quelconque des revendications 1 à 4,
**caractérisé en ce**
**que** le revêtement à action catalytique est composé de deux zones de matériau, dans lequel la première zone de matériau comprend la zéolite ou le composé semblable à la zéolite, tandis que le composé, choisi dans le groupe constitué d'oxyde de baryum, hydroxyde de baryum, carbonate de baryum, oxyde de strontium, hydroxyde de strontium, carbonate de strontium, oxyde de praséodyme, oxyde de lanthane, oxyde de magnésium, oxyde mélangé de magnésium/aluminium, oxyde de métal alcalin, hydroxyde de métal alcalin, carbonate de métal alcalin et leurs mélanges, est contenu dans la seconde zone de matériau.

7. Catalyseur selon la revendication 5,
**caractérisé en ce**
**que** le revêtement à action catalytique est composé de deux zones de matériau, dans lequel la première zone de matériau comprend la zéolite ou le composé semblable à la zéolite, tandis que le métal noble, choisi dans le groupe constitué de platine, palladium, rhodium, iridium, ruthénium, or, argent et leurs mélanges et/ou alliages, est contenu dans la seconde zone de matériau.

8. Catalyseur selon la revendication 6 ou 7,
**caractérisé en ce**
**que** la seconde zone de matériau est appliquée directement sur le corps porteur et s'étend sur toute sa longueur L, tandis que la première zone de matériau est appliquée sur la seconde zone de matériau et s'étend totalement sur celle-ci côté échappement.

9. Catalyseur selon la revendication 6 ou 7,
**caractérisé en ce**
**que** les deux zones de matériau sont agencées l'une derrière l'autre dans la direction d'écoulement des gaz d'échappement sur le corps porteur, dans lequel la seconde zone de matériau recouvre de 10 à 70 % de la longueur L du corps porteur, calculé à partir de l'extrémité côté amont du corps porteur, tandis que la première zone de matériau recouvre de 30 à 90 % de la longueur L du corps porteur, calculé à partir de l'extrémité côté aval du corps porteur.

10. Procédé d'élimination des oxydes d'azote des gaz d'échappement de moteurs Diesel,
**caractérisé en ce**
**que** les gaz d'échappement à purifier présentent un indice d'air λ, supérieur à 1 et sont dirigés vers un catalyseur selon l'une quelconque des revendications 1 à 9.

11. Procédé selon la revendication 10,
**caractérisé en ce**
**que** de l'ammoniac ou un composé décomposant l'ammoniac est alimenté, en tant qu'agent de réduction provenant d'une source indépendante du moteur, dans les gaz d'échappement à purifier, avant l'entrée dans le catalyseur.

12. Procédé selon la revendication 11,
**caractérisé en ce**
**qu'**en guise de composé décomposant l'ammoniac, de l'urée est utilisée, dans lequel celle-ci n'est alimentée dans les gaz d'échappement à purifier qu'à des températures qui sont supérieures ou égales à 180 °C.

13. Procédé selon la revendication 12,
**caractérisé en ce**
**que** le catalyseur vers lequel les gaz d'échappement à purifier sont dirigés stocke les oxydes d'azote sous forme de nitrates à des températures inférieures ou égales à 200 °C, ceux-ci sont de nouveau libérés à des températures supérieures à 200 °C et dont la réduction catalytique sélective avec l'ammoniac est catalysée en même temps.

14. Procédé selon l'une quelconque des revendications 10 à 13,
**caractérisé en ce**
**que** les gaz d'échappement à purifier sont dirigés en outre à travers un catalyseur qui accélère principalement la réduction catalytique sélective des oxydes d'azote avec l'ammoniac.

15. Dispositif pour la réalisation du procédé selon la revendication 14, contenant un catalyseur selon l'une quelconque des revendications 1 à 8 et un catalyseur à SCR agencé sur le côté aval de celui-ci.
